(19) Europäisches Patentamt / European Patent Office / Office européen des brevets

(11) EP 3 761 241 A1

(12) EUROPÄISCHE PATENTANMELDUNG

(43) Veröffentlichungstag:
06.01.2021 Patentblatt 2021/01

(51) Int Cl.:
G06Q 10/06 (2012.01)    G06Q 50/04 (2012.01)
G05B 19/418 (2006.01)

(21) Anmeldenummer: 20181607.1

(22) Anmeldetag: 23.06.2020

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(30) Priorität: 03.07.2019   AT 5011719 U

(71) Anmelder: Siemens AG Österreich
1210 Wien (AT)

(72) Erfinder:
• Sperl, Simon
  4030 Linz (AT)
• Haselböck, Alois
  3392 Schönbühel-Aggsbach (AT)
• Steyskal, Simon Peter
  1230 Wien (AT)

(74) Vertreter: Maier, Daniel Oliver
Siemens AG
Postfach 22 16 34
80506 München (DE)

(54) **VERFAHREN UND SYSTEM ZUR ERZEUGUNG EINES PRODUKTS MITTELS EINER OPTIMALEN PROZESSKETTE DURCH EINE VORGEGEBENE MENGE AN EINSATZMITTELN**

(57)     Verfahren (100) zur Erzeugung eines Produkts (101) mittels einer optimalen Prozesskette (102) durch eine vorgegebene Menge an Einsatzmitteln, wobei folgende Schritte ausgeführt werden:

a) Erstes Ermitteln (110) einer ersten Prozesskette (111) basierend auf einer Produktbeschreibung (103), welcher das Produkt (101) und dessen Erzeugung beschreibt,

b) Zweites Ermitteln (120) zumindest eines verfügbaren Einsatzmittels (121-124) aus der vorgegebenen Menge an Einsatzmitteln mit Hilfe der ersten Prozesskette (111),

c) Drittes Ermitteln (130) einer Ausführungszeit (131) des Einsatzmittels (121-124) mit Hilfe der ersten Prozesskette (111),

d) Schätzen (140) einer Belegung (141) des Einsatzmittels (121-124) unter Berücksichtigung der Ausführungszeit (131),

e) Prüfen (150), ob die Belegung innerhalb eines vordefinierten Wertebereichs liegt, und,

falls zutreffend (151), Fortfahren mit Schritt f),

falls nichtzutreffend (152), Markieren des Einsatzmittels (121-124) als "nicht verfügbar" für die Dauer der Ausführungszeit und Fortfahren mit Schritt b),

f) Zuordnen (160) der ersten Prozesskette (111) zu dem Einsatzmittel (121-124) unter Berücksichtigung der höchsten Belegung als optimale Prozesskette (102),

g) Ausführen (170) der optimalen Prozesskette (102) und Erzeugen des Produkts (101).

FIG 14

EP 3 761 241 A1

**Beschreibung**

Die Erfindung betrifft ein Verfahren und ein System zur Erzeugung eines Produkts mittels einer optimalen Prozesskette durch eine vorgegebene Menge an Einsatzmitteln.

Fortschritte bei Fertigungstechnologien entwickeln sich heutzutage in Richtung Automatisierung und Flexibilität in intelligenten Fertigungs-Ecosystemen. Die Bedürfnisse der Kunden erfordern zunehmend, dass diese Ecosysteme in der Lage sind, die Produktvariabilität schnell, zuverlässig und kostengünstig zu handhaben und dabei ein hohes Maß an Flexibilität zu gewährleisten.

Ein kritischer Engpass bei der Bewältigung der Produktvariabilität in einer Fabrik ist die Gestaltung von Herstellungsprozessen für Produkte, welche die Produktionsanlagen in Fabriken durch sich stark unterscheidende Produktionsketten nicht immer optimal auslasten.

Reihungsaufgaben zur Abarbeitung von Prozessen, also die Erstellung von Prozessketten, sind häufig "NP-harte/NP-schwere" Probleme. Die NP-Schwere bezeichnet eine Eigenschaft eines algorithmischen Problems.

Die Komplexitätstheorie, ein Teilgebiet der theoretischen Informatik, beschäftigt sich mit der Klassifizierung von Problemen bezüglich ihrer Komplexität. Eine wichtige Problemklasse ist die Komplexitätsklasse NP, die Klasse aller Entscheidungsprobleme, für die eine gefundene Lösung effizient überprüft werden kann. Dabei steht NP für nichtdeterministische Polynomialzeit. Ein NP-schweres Problem ist dabei mindestens so "schwer" wie alle Probleme in NP. Das bedeutet, dass ein Algorithmus, der ein NP-schweres Problem löst, mithilfe einer Reduktion benutzt werden kann, um alle Probleme in NP zu lösen.

NP-schwere Probleme können durch sehr komplexe kombinatorische Optimierungsaufgaben in der Lösung sehr Zeit- und Kosten-intensiv sein.

Die meisten bekannten Verfahren zur Prozessplanung berücksichtigen keine Fehlermodelle, alternative Ausführungspfade für einzelne Prozesse, Unsicherheiten in der Ausführungsdauer sowie die Interaktion verschiedener Prozessketten. Ferner wird zur Planung eine große Anzahl identischer Prozessketten benötigt.

Es ist Aufgabe der Erfindung die genannten Nachteile im Stand der Technik zu überwinden und ein Verfahren und ein System bereitstellen, welche die Herstellung neuer Produkte verbessern, insbesondere durch Ermittlung einer optimalen Prozesskette für eine Produktionsanlage.

Die Aufgabe wird durch ein Verfahren eingangs genannter Art gelöst, wobei folgende Schritte ausgeführt werden:

a) Erstes Ermitteln einer ersten Prozesskette basierend auf einem Auftrag, welcher das Produkt und dessen Erzeugung beschreibt,

b) Zweites Ermitteln zumindest eines verfügbaren Einsatzmittels aus der vorgegebenen Menge an Einsatzmitteln mit Hilfe der ersten Prozesskette,

c) Drittes Ermitteln einer Ausführungszeit des zumindest einen Einsatzmittels mit Hilfe der ersten Prozesskette,

d) Schätzen der Belegung des zumindest einen Einsatzmittels unter Berücksichtigung der Ausführungszeit,

e) Prüfen, ob die Belegung innerhalb eines vordefinierten Wertebereichs liegt, und,
falls zutreffend, Fortfahren mit einem Zuordnen im Schritt f),
falls nichtzutreffend, Markieren des zumindest einen Einsatzmittels als "nicht verfügbar" für die Dauer der Ausführungszeit und Fortfahren mit dem zweiten Ermitteln im Schritt b),

f) Zuordnen der ersten Prozesskette zu dem zumindest einen Einsatzmittel unter Berücksichtigung der höchsten Belegung als optimale Prozesskette,

g) Ausführen der optimalen Prozesskette und Erzeugen des Produkts.

Durch die Erfindung wird eine optimale Auswahl an Einsatzmitteln aus einer vorgegebenen Menge an Einsatzmitteln, beispielsweise automatische Produktionsmaschinen in einer Fabrik, zum Erzeugen des Produkts hinsichtlich der optimalen Auslastung verfügbarer Einsatzmittel ermöglicht.

Ferner lässt die Erfindung weniger Einschränkungen der Art der Prozesskette und der Art von Eingangs-Wahrscheinlichkeits-Dichte-Funktionen zu, als bei bisher bekannten Lösungen, sowie erlaubt einen höheren Detaillierungsgrad in deren Ergebnissen.

Dieser höhere Detaillierungsgrad erlaubt genauere Metriken und eine bessere Information über zukünftige Ausführungen von Prozessketten beziehungsweise über eine Nutzung von Einsatzmitteln.

Unter Einsatzmitteln werden beispielsweise automatische Bearbeitungsmaschinen wie CNC-Maschinen, Roboter zum automatischen Zusammenbau einzelnen Komponente, aber auch manuelle Bearbeitungsschritte durch Menschen, sowie Betriebs- und Einsatzmittel wie Ausgangsmaterialien, Schmiermittel, Elektrizität oder Gas zur Durchführung einzelnen Arbeitsschritte, verstanden.

Unter einer Prozesskette wird beispielsweise eine sequenzielle Abfolge von Bearbeitungsschritten verstanden, wobei einzelne Schritte auch parallel erfolgen können.

Die Dauer der Ausführungszeit ist die Zeitspanne zwischen einer Startzeit und einer Endzeit eines Auftrages.

Eine Prozesskette kann beispielsweise durch BPMN ("Business Process Management Notation") beschrieben werden, bei welcher:

- Eine Wahrscheinlichkeits-Dichte-Funktion für die Dauer jedes Auftrags, und
- Die Wahrscheinlichkeit für jeden Ausgangs-Knoten eines XOR-Durchgangs im Prozess-Modus bestimmt wird.

Ein Prozessmodell kann als gerichteter und verbundener Graph *(N,E)* beschrieben werden:

$$N = A \cup G \cup \{n_{Start}, n_{Ende}\}$$

mit

$$E \sqsubseteq N \times N$$

wobei

| | |
|---|---|
| $N$ | eine endliche Menge von Knoten, |
| $A$ | eine Menge von Aufträgen/ Aktivitäten (englisch "activities"), |
| $G$ | eine Menge von Durchgängen (oder auch Gatter; englisch "gateways"), |
| $n_{start}$ | ein Auftrags-Start (Ereignis), |
| $n_{Ende}$ | ein Auftrags-Ende (Ereignis), und |
| $E$ | eine Menge von Kanten, welche die Knoten verbinden, ist. |

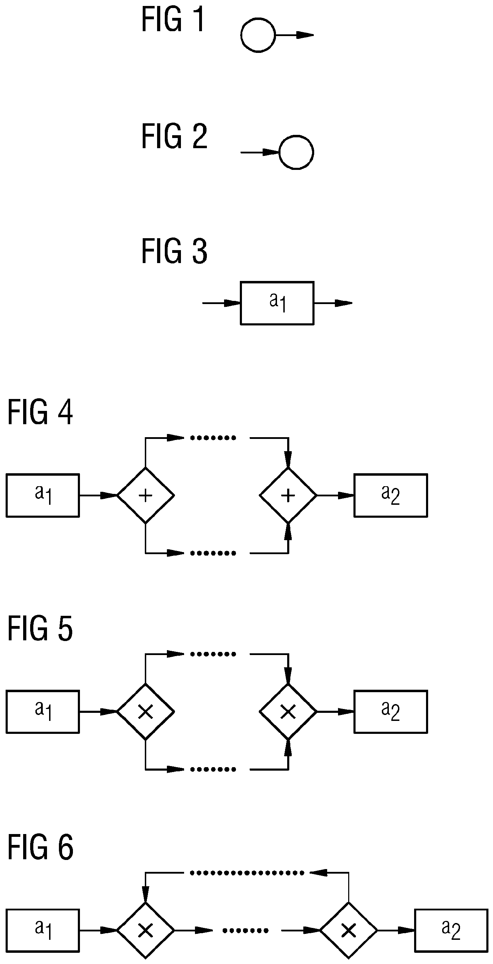

**Fig. 1** zeigt einen Start-Knoten, **Fig. 2** einen End-Knoten, **Fig. 3** einen Auftrag $a_a$, **Fig. 4** einen UND-Durchgang (UND-Gatter), **Fig. 5** einen XOR-Durchgang (XOR-Gatter) und **Fig. 6** eine Schleife gemäß einer vereinfachten BPMN.

Eine Fähigkeit eines Einsatzmittels ist

$$s_{r,a} \colon \mathbb{R}^+ \qquad \forall r \in R, \forall a \in A$$

wobei

| | |
|---|---|
| $R$ | eine Menge von Einsatzmitteln (englisch "resources"), und |
| $S_{r,a}$ | ein Multiplikations-Faktor eines Einsatzmittels r für die Dauer eines Auftrags *a* ist. |

Beispielsweise bedeutet $S_{r,a} < 1$*,* dass ein Einsatzmittel r einen Auftrag *a* wahrscheinlich schneller als der Durchschnitt durchführen kann.

Beispielsweise bedeutet $S_{r,a} > 1$, dass ein Einsatzmittel r einen Auftrag *a* wahrscheinlich langsamer als der Durchschnitt durchführen kann.

Beispielsweise kann $S_{r,a} > 10$, das heißt größer als ein vorgegebener Grenzwert, bedeuten, dass ein Einsatzmittel r nicht für einen Auftrag *a* angewendet werden kann.

Eine Einsatzmittel-Auftrags-Zuordnung

$$W_r \colon A \to [0,1] \qquad \forall r \in R$$

ist ein Zeitanteil, welcher ein Einsatzmittel r an der Ausführung eines Auftrags *a* arbeitet. Beispiele dazu sind in Tabelle 1 angeführt.

Tabelle 1: Beispiele für eine Einsatzmittel-Auftrags-Zuordnung

| Einsatzmittel → Auftrag↓ | $r_1$ | $r_2$ | Beschreibung |
|---|---|---|---|
| $a_1$ | 1 | 0 | Der Auftrag $a_1$ ist nur dem Einsatzmittel $r_1$ zugeordnet und wird $r_1$ voll auslasten |
| $a_2$ | 0 | 0.5 | Der Auftrag $a_2$ ist nur dem Einsatzmittel $r_2$ zugeordnet und wird $r_2$ zur Hälfte auslasten |
| $a_3$ | 0.5 | 1 | Der Auftrag $a_3$ ist den Einsatzmitteln $r_1$ und $r_2$ zugeordnet und wird $r_1$ zur Hälfte und $r_2$ voll auslasten |

In einer Weiterbildung der Erfindung ist es vorgesehen, dass im Schritt des dritten Ermittelns eine Wahrscheinlichkeits-Dichte-Funktion für die Ausführungszeit des zugeordneten zumindest einen Einsatzmittels bestimmt wird.

Dadurch wird erreicht, dass die Wahrscheinlichkeit berücksichtigt wird, mit welcher ein Auftrag $a$ mittels Einsatzmitteln mit der Zuordnung w ausgeführt wird und dafür die Dauer t benötigt, und die optimale Prozesskette daher genauer bestimmt werden kann.

Eine Wahrscheinlichkeits-Dichte-Funktion für eine Dauer eines Auftrags $a \in A$

$$D_a(t): \mathbb{R}^+ \to [0,1] \qquad \forall a \in A$$

Repräsentiert die Wahrscheinlichkeit, dass der Auftrag $a$ im Durchschnitt eine Dauer t benötigt.

Die Auftragsdauern $D_a(t)$ werden geschätzt oder mittels Verfahren, welche auf dem Prinzip des maschinellen Lernens beruhen, bestimmt und dem Prozessmodell zugeordnet.

Eine Auftragsdauer bezüglich einer Zuordnung kann durch eine Wahrscheinlichkeits-Dichte-Funktion für einen Auftrag $a \in A$ und eine Zuordnung $w \in W$ beschrieben werden, welche die Wahrscheinlichkeit bezeichnet, dass ein Auftrag $a$ mittels Einsatzmitteln mit der Zuordnung w ausgeführt wird und dafür die Dauer t benötigt.

$$D_{w,a}(t): \mathbb{R}^+ \to [0,1] \qquad \forall w \in W, \forall a \in A$$

$$D_{w,a}(t) = D_a\left(\frac{t}{s_{w,a}}\right)$$

$$s_{w,a} = \frac{\sum_{r \in R} s_{r,a} W_r(a)}{\sum_{r \in R} W_r(a)}$$

Die Wahrscheinlichkeits-Dichte-Funktion $D_{w,a}(t)$ ist die um den Faktor $s_{w,a}$ erweiterte Wahrscheinlichkeits-Dichte-Funktion $D_a(t)$.

Der Faktor $s_{w,a}$ ist der gewichtete Durchschnitt des Faktors für die Fähigkeit eines Einsatzmittels $s_{r,a}$ gemäß den vorstehenden Erläuterungen.

Beispielsweise kann $s_{w,a}$ = 0.5, ausgehend von einem Einsatzmittel $r$, und $D_a(t)$ als Normalverteilung mit N(5,1), das heißt ein Auftrag $a$ weist eine durchschnittliche Dauer von 5 mit einer Varianz von 1 auf, und das Einsatzmittel r ist bei der Ausführung des Auftrags $a$ um einen Faktor 0.5 schneller als der Durchschnitt. Die Wahrscheinlichkeits-Dichte-Funktion $D_{w,a}(t)$ für eine Dauer des Auftrags $a$ ergibt sich dann zu $N(2.5, 0.25)$.

Wie bekannt, ergibt für Normalverteilungen das Produkt eines Skalars und einer Zufallsvariable ($k*X$) eine neue Zufallsvariable mit einem Mittelwert von $k * Mittelwert(X)$ und einer Varianz von $k^2 * Varianz(X)$.

In einer Weiterbildung der Erfindung ist es vorgesehen, dass im Schritt des Schätzens eine Kanten-Übergangs-Wahrscheinlichkeitsfunktion bestimmt wird.

Dadurch wird erreicht, dass die optimale Prozesskette auf eine einfache Weise bestimmt werden kann.

Die im Nachfolgenden verwendete Kanten-Übergangs-Wahrscheinlichkeitsfunktion berücksichtigt folgende Eigenschaften:

- es werden Kanten-Übergangs-Wahrscheinlichkeits-Zeiten verwendet, nicht nur Auftrags-Dauern,
- es können Prozess-Schleifen eingebunden werden, und
- es werden Fähigkeiten von Einsatzmittel verwendet.

Eine Kanten-Übergangs-Wahrscheinlichkeitsfunktion bezeichnet die Wahrscheinlichkeit, mit welcher eine Kante (englisch "edge") $e \in E$ zu einem Zeitpunkt $t \in \mathbb{R}^+$ durchlaufeni wird:

$$f_e: \mathbb{R}^+ \to [0,1] \qquad \forall e \in E$$

Wie bekannt, beträgt die Kanten-Übergangs-Wahrscheinlichkeitsfunktion einer ersten Kante eines Prozesses, welcher den Auftrags-Start $n_{Start}$ verlässt, einen Eingabewert, welcher die Startzeit der jeweiligen Prozess-Instanz bezeichnet.

Wie bekannt, ist $f_e(t)$ nicht notwendigerweise eine Wahrscheinlichkeits-Dichte-Funktion, jedoch falls der Prozess keine XOR-Durchgänge aufweist, trifft die Bedingung $\forall e \in E$: $\int f_e(t)\, dt = 1$ immer zu und alle $f_e(t)$ sind Wahrscheinlichkeits-Dichte-Funktionen.

In einer Weiterbildung der Erfindung ist es vorgesehen, dass im Schritt des Schätzens eine Kanten-Durchlaufs-Wahrscheinlichkeitsfunktion bestimmt wird.

Dadurch wird erreicht, dass die optimale Prozesskette auf eine besonders einfache Weise bestimmt werden kann.

Eine Kanten-Durchlaufs-Wahrscheinlichkeitsfunktion $f_{out}(t)$ für einen Auftrag $a \in A$ mit einer eingehenden Kante in, einer ausgehenden Kante out und einer Wahrscheinlichkeits-Dichte-Funktion für die Dauer $D_{w,a}(t)$ ist gegeben durch:

$$f_{out}(t) = f_{in}(t) * D_{w,a}(t)$$

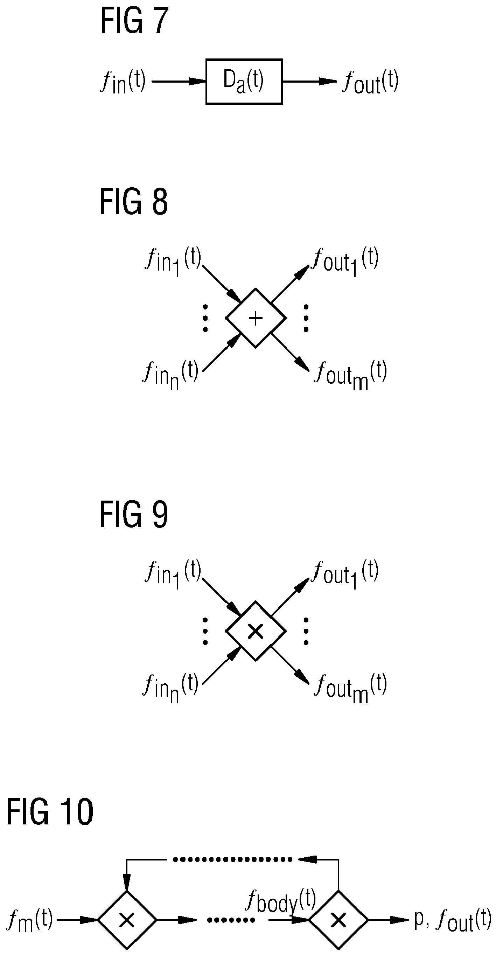

**Fig. 7** zeigt symbolisch eine Wahrscheinlichkeits-Dichte-Funktion für die Dauer eines Auftrags $a$.

Wie bekannt, ist der Faltungs-Operator * für zwei Funktionen $f$ und $g$ definiert als:

$$(f * g)(t) = \int f(t')\, g(t - t')\, dt'$$

Beispielsweise ergibt die Faltung zweier Gauß-verteilter Wahrscheinlichkeits-Dichte-Funktionen:

$$N(\mu_1, \sigma_1^2) * N(\mu_2, \sigma_2^2) = N(\mu_1 + \mu_2, \sigma_1^2 + \sigma_2^2)$$

Eine Kanten-Übergangs-Wahrscheinlichkeitsfunktion für UND-Durchgänge ist für Durchgänge $g \in G_{AND}$ mit eingehenden Kanten $\{in_1, ..., in_n\} = E \cap (N \times g)$ und ausgehenden Kanten $\{out_1, ...,out_m\} = E \cap (g \times N)$ definiert als:

$$f_{out_j}(t) = \left( \prod_{i=1}^{n} \int^{t} f_{in_i}(t')\, dt' \right) \frac{d}{dt} \qquad (1 \le j \le m)$$

**Fig. 8** zeigt symbolisch eine Kanten-Übergangs-Wahrscheinlichkeitsfunktion für einen UND-Durchgang.

Eine Kanten-Übergangs-Wahrscheinlichkeitsfunktion für XOR-Durchgänge ist für Durchgänge $g \in G_{XOR}$ mit eingehenden Kanten $\{in_1 ..., in_n\} = E \cap (N \times g)$ und ausgehenden Kanten $\{out1, ..., out_m\} = E \cap (g \times N)$ definiert als:

$$f_{out_j}(t) = p_{out_j} \sum_{i=1}^{n} f_{in_i}(t) \qquad (1 \le j \le m)$$

**Fig.** 9 zeigt symbolisch eine Kanten-Übergangs-Wahrscheinlichkeitsfunktion für einen XOR-Durchgang.

Bei einem gegebene Prozessmodell P und einer Menge and XOR-Durchgängen $g \in G_{XOR}$ aus P, wobei jede Kante $e \in E$, welche von einem Durchgang ausgeht, kann eine Kanten-Wahrscheinlichkeit $p_e \in [0,1]$ angegeben werden. Alle Kanten-Wahrscheinlichkeiten müssen größer als Null sein und die Bedingung erfüllen:

$$\sum_{e \in E \cap (g \times N)} p_e = 1 \qquad (\forall g \in G_{XOR})$$

Eine Kanten-Übergangs-Wahrscheinlichkeitsfunktion für Schleifen ist mit einer Kanten-Wahrscheinlichkeit p für das Verlassen einer Schleife, wobei ein Schleifenkörper $f_{body}$ berechnet wird, indem der Inhalt der Schleife als ein separater Prozess behandelt wird, definiert als:

$$f_{out}(t) = f_{in}(t) * \left( \sum_{i=1}^{\infty} p(1-p)^{i-1} \left( f_{body}(t) * ... * f_{body}(t) \right)_{\#i} \right)$$

**Fig.** 10 zeigt symbolisch eine Kanten-Übergangs-Wahrscheinlichkeitsfunktion für eine Schleife.

In einer Weiterbildung der Erfindung ist es vorgesehen, dass im Schritt des Schätzens aus einer Ausführungszeit-Wahrscheinlichkeitsfunktion die Belegung bestimmt wird. Dadurch wird erreicht, dass die optimale Prozesskette eine Belegung von Einsatzmitteln berücksichtigt und diese auf eine besonders einfache Weise bestimmt werden kann.

Eine Über-Belegung eines Einsatzmittels kann die Herstellung eines Produkts unerwünscht verzögern. Durch die rechtzeitige Identifizierung einer Über-Belegung kann somit das Risiko bei der Herstellung reduziert werden.

Dabei ist es günstig, wenn für verschiedene Parameter einer Prozesskette Werte in Form von Wahrscheinlichkeiten und stochastischen Variablen mit einer vorgegebenen Wahrscheinlichkeits-Dichte-Funktion geschätzt werden, statt Skalare zu verwenden.

Das Risiko, insbesondere bei einer Einsatzmittel-Zuordnung, kann dadurch beschrieben werden, wie viele Einsatzmittel wahrscheinlich überbelegt werden, wenn eine Prozesskette unter Berücksichtigung von Unsicherheiten ausgeführt wird.

Die Ausführungszeit-Wahrscheinlichkeitsfunktion $F_a$ bezeichnet die Wahrscheinlichkeit, dass ein Auftrag $a \in A$ zu einem Zeitpunkt $t \in \mathbb{R}^+$ ausgeführt wird, wobei jeder Auftrag $a$ genau eine eingehende Kante aufweist:

$$F_a: \mathbb{R}^+ \to [0,1] \qquad \forall a \in A$$

Der Auftrag wird Zeitpunkt t ausgeführt, das heißt der Auftrag wird vor dem Zeitpunkt t begonnen und nach dem Zeitpunkt t beendet:

$$F_a = \int_0^t f_{in}(t') \, dt' - \int_0^t f_{in}(t') * D_{r,a}(t') dt'$$

Die Belegung wird immer in Zusammenhang mit einem Einsatzmittel verwendet.

Eine Belegung mit Belegungs-Werten $o \in \mathbb{R}^+$, $o \geq 1$ wird als Über-Belegung bezeichnet.

Wie bekannt, ist die Belegung, verglichen zu $f_e$ oder $F_a$, niemals eine Wahrscheinlichkeits-Dichte-Funktion ($e \in E$, $a \in A$).

Die Gesamtbelegungs-Wahrscheinlichkeits-Dichte-Funktion 0 über die Zeit eines Einsatzmittels $r \in R$ zu einem Zeitpunkt $t \in \mathbb{R}^+$ ist mit $\{a_1,...,a_n\}$ definiert als:

$$O_r: (\mathbb{R}^+ \times \mathbb{R}^+) \to \mathbb{R}^+$$

$$O_r(t, o) = \delta(o, 0)$$
$$*_o \left( \delta\left(o, W_{a_1, r}\right) F_{a_1}(t) + \delta(o, 0) \left(1 - F_{a_1}(t)\right) \right)$$
$$\dots$$
$$*_o \left( \delta\left(o, W_{a_n, r}\right) F_{a_1}(t) + \delta(o, 0) \left(1 - F_{a_n}(t)\right) \right)$$

wobei $*_o$ die Faltung über den Parameter $o$ ist.

Wie bekannt, wenn t fixiert wird, ist $O_r(t,o)$ immer eine Wahrscheinlichkeits-Dichte-Funktion über o.

Wie bekannt, kann die Dirac-Delta-Funktion $\delta(x, x_0)$ als Wahrscheinlichkeits-Dichte-Funktion für die Belegung verwendet werden, wobei diese eine vollständige Gewissheit der Nicht-Verfügbarkeit ausdrückt. Die Dirac-Delta-Funktion ist definiert durch

$$\delta(x, x_0) = \begin{cases} 0 & x \neq x_0 \\ \infty & x = x_0 \end{cases} \qquad 1 = \int_{-\infty}^{\infty} \delta(x)\, dx$$

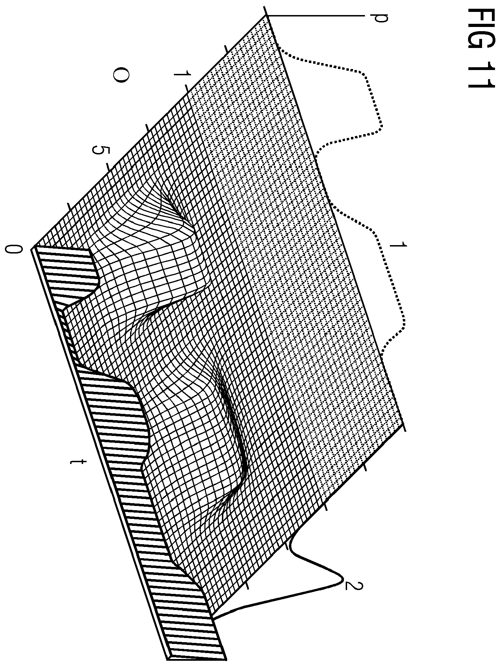

**Fig.** 11 stellt ein Beispiel für die Gesamtbelegungs-Wahrscheinlichkeits-Dichte-Funktion 0 in Abhängigkeit eines Parameters o und der Zeit t dar. Es ist eine Ausführungswahrscheinlichkeit 1 und eine Wahrscheinlichkeits-Dichte-Funktion 2 für eine Einsatzmittel-Belegung erkennbar. Die Kanten-Wahrscheinlichkeit p ist auf der z-Achse ablesbar.

In einer Weiterbildung der Erfindung ist es vorgesehen, dass im Schritt des Prüfens aus einer Prozess-Ausführungs-Wahrscheinlichkeit eine Belegung des zumindest einen Einsatzmittels bestimmt wird.

Dadurch wird erreicht, dass die optimale Prozesskette eine Über-Belegung von Einsatzmitteln berücksichtigt und diese auf eine besonders einfache Weise bestimmt werden kann.

Eine Einsatzmittel-Über-Belegung $m_r(r \in R)$ ist der Umfang von Belegungen $\geq 1$:

$$m_r: \mathbb{R}$$

$$m_r = \int_1^{\infty} \int_0^{\infty} O_r(t, o)\, dt\, do$$

Eine Prozess-Über-Belegung m ist die Summe aller Einsatzmittel-Über-Belegungen:

$$m: \mathbb{R}$$

$$m = \sum_{r \in R} m_r$$

Eine Prozess-Ausführungsfunktion $F_P$ zu einem Zeitpunkt $t \in \mathbb{R}^+$ ist:

$$F_P: \mathbb{R}^+ \rightarrow \mathbb{R}^+$$

$$F_P(t) = \int_0^t f_{e_{start}}(t')\, dt - \int_0^t f_{e_{end}}(t')\, dt$$

In einer Weiterbildung der Erfindung ist es vorgesehen, dass aus der Prozess-Ausführungs-Wahrscheinlichkeit eine Einsatzmittel-Nutzungs-Abweichung bestimmt wird.

Dadurch wird erreicht, dass die optimale Prozesskette eine Abweichung von der optimalen Einsatzmittel-Nutzung berücksichtigt und diese auf eine besonders einfache Weise bestimmt werden kann.

Einsatzmittel-Nutzungs-Abweichungen $u_r$ mit ($r \in R$) sind die ackumulierten Distanzen von der optimalen Einsatzmittel-Nutzung:

$$u_r \colon \mathbb{R}$$

$$u_r = \int_0^\infty F_P(t) \int_0^\infty |1 - O_r(t, o)| \, do \, dt$$

In einer Weiterbildung der Erfindung ist es vorgesehen, dass aus der Einsatzmittel-Nutzungs-Abweichung eine Prozess-Nutzungs-Abweichung bestimmt wird.

Dadurch wird erreicht, dass die optimale Prozesskette eine Prozess-Nutzungs-Abweichung berücksichtigt und diese auf eine besonders einfache Weise bestimmt werden kann.

Eine Prozess-Nutzungs-Abweichung *u* ist sie Summe aller Einsatzmittel-Nutzungs-Abweichungen:

$$u \colon \mathbb{R}$$

$$u = \sum_{r \in R} u_r$$

In einer Weiterbildung der Erfindung ist es vorgesehen, dass die optimale Prozesskette zumindest einen Vorgang, welcher auf einer automatischen Vorrichtung ausführbar ist, umfasst.

Dadurch wird erreicht, dass Parameter, welche die optimale Prozesskette beschreiben, besonders genau erfasst werden, beispielsweise durch maschinelles Lernen, und so die optimale Prozesskette besonders präzise bestimmt werden kann.

Die erfindungsgemäße Aufgabe wird auch durch ein System eingangs genannter Art gelöst, ferner umfassend eine Rechenvorrichtung, welche dazu eingerichtet ist, das erfindungsgemäße Verfahren auszuführen.

Die Erfindung wird nachfolgend anhand eines in den beigeschlossenen Zeichnungen dargestellten Ausführungsbeispiels näher erläutert. In den Zeichnungen zeigt:

Fig. 1       einen Start-Knoten in einer vereinfachten BPMN,

Fig. 2       einen End-Knoten in einer vereinfachten BPMN,

Fig. 3       einen Auftrag in einer vereinfachten BPMN,

Fig. 4       einen UND-Durchgang in einer vereinfachten BPMN,

Fig. 5       einen XOR-Durchgang in einer vereinfachten BPMN,

Fig. 6       eine Schleife in einer vereinfachten BPMN,

Fig. 7       symbolisch eine Wahrscheinlichkeits-Dichte-Funktion für die Dauer eines Auftrags,

Fig. 8       symbolisch eine Kanten-Übergangs-Wahrscheinlichkeitsfunktion für einen UND-Durchgang,

Fig. 9       symbolisch eine Kanten-Übergangs-Wahrscheinlichkeitsfunktion für einen XOR-Durchgang,

Fig. 10    symbolisch eine Kanten-Übergangs-Wahrscheinlichkeitsfunktion für eine Schleife,

Fig. 11    ein Beispiel für die Gesamtbelegungs-Wahrscheinlichkeits-Dichte-Funktion,

Fig. 12    eine schematische Darstellung eines Ausführungsbeispiels für das erfindungsgemäße Verfahren,

Fig. 13    eine schematische Darstellung eines Ausführungsbeispiels für die erfindungsgemäße System,

Fig. 14    eine schematische Darstellung der Zuordnung von Teilprozessen einer Prozesskette und Einsatzmitteln zur Herstellung eines Produkts.

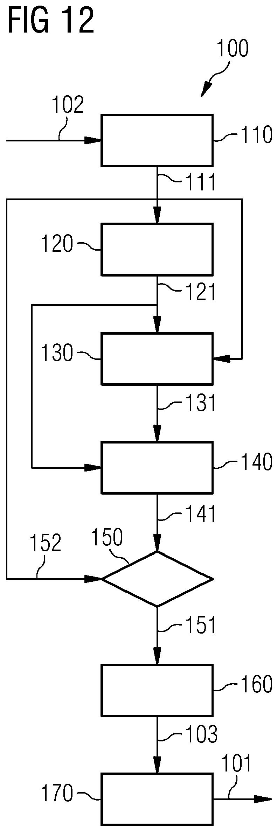

**Fig. 12** zeigt schematisch ein Ausführungsbeispiel für das erfindungsgemäße Verfahren 100 zur Erzeugung eines Produkts 101 mittels einer optimalen Prozesskette 102 durch eine vorgegebene Menge an Einsatzmitteln. Folgende Schritte werden dabei ausgeführt:

a) Erstes Ermitteln 110 einer ersten Prozesskette 111 basierend auf einer Produktbeschreibung 103, welcher das Produkt 101 und dessen Erzeugung beschreibt,

b) Zweites Ermitteln 120 zumindest eines verfügbaren Einsatzmittels 121 aus der vorgegebenen Menge an Einsatzmitteln mit Hilfe der ersten Prozesskette 111,

c) Drittes Ermitteln 130 einer Ausführungszeit 131 des zumindest einen Einsatzmittels 121 mit Hilfe der ersten Prozesskette 111,

d) Schätzen 140 einer Belegung 141 des zumindest einen Einsatzmittels 121 unter Berücksichtigung der Ausführungszeit 131,

e) Prüfen 150, ob die Belegung innerhalb eines vordefinierten Wertebereichs liegt, und,
falls zutreffend 151, Fortfahren mit einem Zuordnen 160 im Schritt f),
falls nichtzutreffend 152, Markieren des zumindest einen Einsatzmittels 121 als "nicht verfügbar" für die Dauer der Ausführungszeit und Fortfahren mit dem zweiten Ermitteln 120 im Schritt b),

f) Zuordnen 160 der ersten Prozesskette 111 zu dem zumindest einen Einsatzmittel 121 unter Berücksichtigung der höchsten Belegung als optimale Prozesskette 102,

g) Ausführen 170 der optimalen Prozesskette 102 und Erzeugen des Produkts 101.

Im Schritt des dritten Ermittelns 130 wird optional eine Dichte-Funktion für die Ausführungszeit 131 des zugeordneten zumindest einen Einsatzmittels 121 bestimmt.
Im Schritt des Schätzens 140 wird optional eine Kanten-Übergangs-Wahrscheinlichkeitsfunktion bestimmt.
Im Schritt des Schätzens 140 wird optional eine Kanten-Durchlaufs-Wahrscheinlichkeitsfunktion bestimmt.
Im Schritt des Schätzens 140 wird optional aus einer Ausführungszeit-Wahrscheinlichkeitsfunktion die Belegung 141 bestimmt.
Im Schritt des Prüfens 150 wird optional aus einer Prozess-Ausführungs-Wahrscheinlichkeit eine Belegung des zumindest einen Einsatzmittels 121 bestimmt.
Aus der Prozess-Ausführungs-Wahrscheinlichkeit wird optional eine Einsatzmittel-Nutzungs-Abweichung bestimmt.
Aus der Einsatzmittel-Nutzungs-Abweichung wird optional eine Prozess-Nutzungs-Abweichung bestimmt.
Es ist klar, dass bei dem optionalen Bestimmen vorher genannter Parameter ein weiterer Parameter zu dessen Bestimmung erforderlich ist und daher ebenfalls bestimmt werden muss.
Die genannten optionalen Schritte sind untereinander kombinierbar.
Allgemein können beispielsweise Schleifen eine unendliche Summe bilden. Für Prozessketten, die Schleifen aufweisen, können numerische Integrations-Verfahren angewendet werden.
Das Verfahren kann beispielsweise durch das Monte Carlo-Verfahren implementiert werden, welches eine zufällige Prozess-Ausführung wiederholt simuliert und daraus Wahrscheinlichkeits-Dichte-Funktionen erzeugt, jedoch zu einem entsprechend hohen Aufwand bei einer gewünschten Genauigkeit führt.

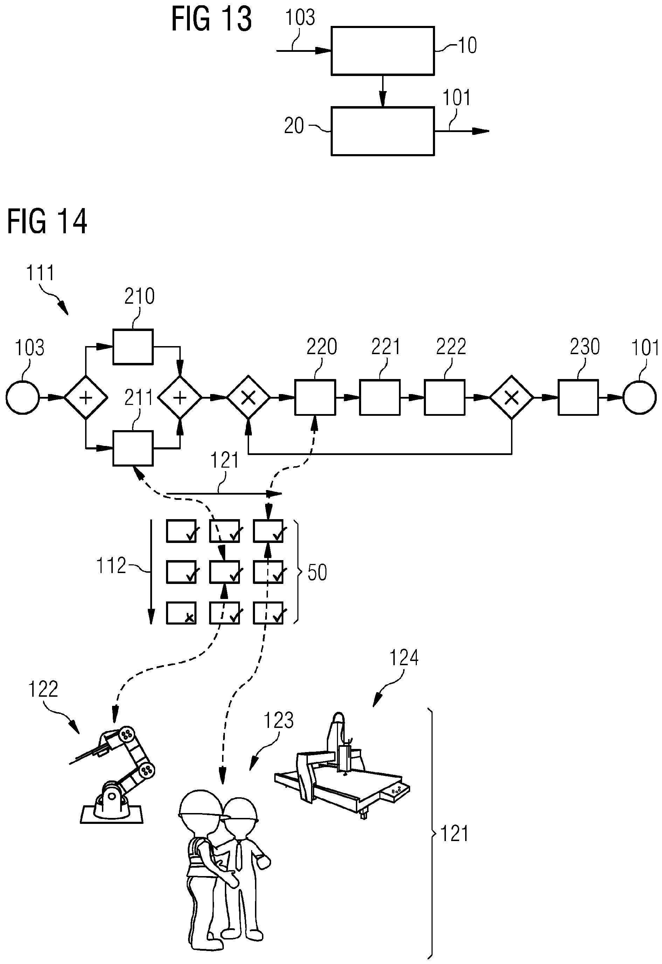

**Fig. 13** zeigt schematisch ein Ausführungsbeispiel für die erfindungsgemäßes System zur Erzeugung eines Produkts 101 aufgrund Produktbeschreibung 103 mittels der optimalen Prozesskette 102 durch eine vorgegebene Menge an Einsatzmitteln und eine Rechenvorrichtung, welche dazu eingerichtet ist, das Verfahren 100 auszuführen.

**Fig. 14** eine schematische BPMN-Darstellung der Zuordnung von Teilprozessen 112, 210, 211, 220-222, 230, einer Prozesskette 111 und Einsatzmitteln 121-124 zur Herstellung des Produkts 101 mittels einer Zuordnungs-Matrix 50.

Der BPMN-Graph zeigt Aktivitäten bzw. Aufträge 210, 211, 220-222, 230, UND-Gatter, ein XOR-Gatter und eine Schleife Beispielhaft sind Zuordnungen eines Einsatzmittels 122 in Form eines Schweißroboters 122 mit einem Auftrag 211 oder in Form von manueller Arbeit 123 durch Menschen mit einem Auftrag 220 dargestellt und strichliert markiert.

Ferner ist erkennbar, ob ein jeweiliges Einsatzmittel verfügbar ist (Haken) oder nicht (Kreuz), wobei die Belegung in einem Speicher gespeichert ist.

Einsatzmittel 121 können beispielsweise Schweiß-Roboter 122, manuelle Arbeit 123 durch Menschen oder eine CNC-Fräsmaschine 124 sein.

**Bezugszeichenliste:**

| | |
|---|---|
| 1 | Ausführungswahrscheinlichkeit |
| 2 | Wahrscheinlichkeits-Dichte-Funktion für eine Einsatzmittel-Belegung |
| 10 | Berechnungsanlage |
| 20 | Produktionsanlage |
| 50 | Zuordnungs-Matrix (Prozess vs. Einsatzmittel) |
| 100 | Verfahren |
| 101 | Produkt |
| 102, 111 | Prozesskette |
| 112, 210, 211, 220-222, 230 | (Teil-) Prozess |
| 103 | Produktbeschreibung |
| 110, 120, 130 | Ermitteln |
| 121 | Einsatzmittel |
| 122 | Schweiß-Roboter |
| 123 | manuelle Arbeit durch Menschen |
| 124 | CNC-Fräsmaschine |
| 131 | Wahrscheinlichkeits-Dichte-Funktion für die Ausführungszeit |
| 140 | Schätzen |
| 141 | Belegung |
| 150 | Prüfen |
| 151 | zutreffend |
| 152 | nichtzutreffend |
| 160 | Zuordnen |
| 170 | Ausführen |
| $a_1$, $a_2$ | Auftrag |
| $D_a(t)$ | Wahrscheinlichkeits-Dichte-Funktion für die Dauer eines Auftrags $a$ |
| $f_{in_1}(t)$, $f_{in_m}(t)$ | Kanten-Übergangs-Wahrscheinlichkeitsfunktion für eingehende Kanten |
| $f_{out_1}(t)$, $f_{out_m}(t)$ | Kanten-Übergangs-Wahrscheinlichkeitsfunktion für ausgehende Kanten |
| $f_{body}(t)$ | Schleifenkörper |
| $o$ | Parameter |
| $p$ | Kanten-Wahrscheinlichkeit |
| $t$ | Zeit |

**Patentansprüche**

**1.** Verfahren (100) zur Erzeugung eines Produkts (101) mittels einer optimalen Prozesskette (102) durch eine vorgegebene Menge an Einsatzmitteln, wobei folgende Schritte ausgeführt werden:

a) Erstes Ermitteln (110) einer ersten Prozesskette (111) basierend auf einer Produktbeschreibung (103), welcher das Produkt (101) und dessen Erzeugung beschreibt,
b) Zweites Ermitteln (120) zumindest eines verfügbaren Einsatzmittels (121-124) aus der vorgegebenen Menge an Einsatzmitteln mit Hilfe der ersten Prozesskette (111),

c) Drittes Ermitteln (130) einer Ausführungszeit (131) des zumindest einen Einsatzmittels (121-124) mit Hilfe der ersten Prozesskette (111),

d) Schätzen (140) einer Belegung (141) des zumindest einen Einsatzmittels (121-124) unter Berücksichtigung der Ausführungszeit (131),

e) Prüfen (150), ob die Belegung innerhalb eines vordefinierten Wertebereichs liegt, und,

falls zutreffend (151), Fortfahren mit Schritt f),

falls nichtzutreffend (152), Markieren des zumindest einen Einsatzmittels (121-124) als "nicht verfügbar" für die Dauer der Ausführungszeit und Fortfahren mit Schritt b),

f) Zuordnen (160) der ersten Prozesskette (111) zu dem zumindest einen Einsatzmittel (121-124) unter Berücksichtigung der höchsten Belegung als optimale Prozesskette (102),

g) Ausführen (170) der optimalen Prozesskette (102) und Erzeugen des Produkts (101).

2. Verfahren (100) nach dem vorhergehenden Anspruch, wobei im Schritt des dritten Ermittelns (130) eine Wahrscheinlichkeits-Dichte-Funktion für die Ausführungszeit (131) des zugeordneten zumindest einen Einsatzmittels (121-124) bestimmt wird.

3. Verfahren (100) nach dem vorhergehenden Anspruch, wobei im Schritt des Schätzens (140) eine Kanten-Übergangs-Wahrscheinlichkeitsfunktion bestimmt wird.

4. Verfahren (100) nach einem der vorhergehenden Ansprüche, wobei im Schritt des Schätzens eine Kanten-Durchlaufs-Wahrscheinlichkeitsfunktion bestimmt wird.

5. Verfahren (100) nach einem der vorhergehenden Ansprüche, wobei im Schritt des Schätzens (140) aus einer Ausführungszeit-Wahrscheinlichkeitsfunktion die Belegung (141) bestimmt wird.

6. Verfahren (100) nach einem der vorhergehenden Ansprüche, wobei im Schritt des Prüfens (150) aus einer Prozess-Ausführungs-Wahrscheinlichkeit eine Belegung des zumindest einen Einsatzmittels (121-124) bestimmt wird.

7. Verfahren (100) nach dem vorhergehenden Anspruch, wobei aus der Prozess-Ausführungs-Wahrscheinlichkeit eine Einsatzmittel-Nutzungs-Abweichung bestimmt wird.

8. Verfahren (100) nach dem vorhergehenden Anspruch, wobei aus der Einsatzmittel-Nutzungs-Abweichung eine Prozess-Nutzungs-Abweichung bestimmt wird.

9. System zur Erzeugung eines Produkts (101) mittels einer optimalen Prozesskette (102) durch eine vorgegebene Menge an Einsatzmitteln und eine Rechenvorrichtung, welche dazu eingerichtet ist, das Verfahren (100) nach einem der vorhergehenden Ansprüche auszuführen.

FIG 1

FIG 2

FIG 3

FIG 4

FIG 5

FIG 6

## FIG 7

$$f_{in}(t) \longrightarrow \boxed{D_a(t)} \longrightarrow f_{out}(t)$$

## FIG 8

$f_{in_1}(t)$, $f_{out_1}(t)$, $f_{in_n}(t)$, $f_{out_m}(t)$ with a diamond containing $+$

## FIG 9

$f_{in_1}(t)$, $f_{out_1}(t)$, $f_{in_n}(t)$, $f_{out_m}(t)$ with a diamond containing $\times$

## FIG 10

$f_m(t)$, $f_{body}(t)$, $p, f_{out}(t)$

FIG 11

# FIG 12

FIG 13

FIG 14

Europäisches Patentamt

European Patent Office

Office européen des brevets

**EUROPÄISCHER RECHERCHENBERICHT**

Nummer der Anmeldung

EP 20 18 1607

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2008 020167 A1 (SIEMENS AG [DE]) 16. Juli 2009 (2009-07-16) * Absätze [0054] - [0056], [0008] - [0015], [0032], [0039] * ----- | 1-9 | INV. G06Q10/06 G06Q50/04 G05B19/418 |
| X | US 2011/282475 A1 (GHOSH SOUMYADIP [US] ET AL) 17. November 2011 (2011-11-17) * Absätze [0017] - [0023], [0048] - [0072] * ----- | 1-9 | |
| A | Simon Sperl ET AL: "Resource Utilization Prediction in Decision-Intensive Business Processes", Proceedings of the 7th International Symposium on Data-driven Process Discovery and Analysis (SIMPDA 2017), 1. Dezember 2017 (2017-12-01), Seiten 128-141, XP055715420, Gefunden im Internet: URL:http://ceur-ws.org/Vol-2016/paper10.pdf [gefunden am 2020-07-16] * das ganze Dokument * ----- | 1-9 | |
| A | EP 2 770 465 A1 (SIEMENS AG [DE]) 27. August 2014 (2014-08-27) * Absätze [0080] - [0088], [0128], [0129], [0174] * ----- | 7,8 | RECHERCHIERTE SACHGEBIETE (IPC) G06Q G05B |

Der vorliegende Recherchenbericht wurde für alle Patentansprüche erstellt

| Recherchenort | Abschlußdatum der Recherche | Prüfer |
|---|---|---|
| München | 7. September 2020 | Hopper, Eva |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 18 1607

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-09-2020

| Im Recherchenbericht angeführtes Patentdokument | Datum der Veröffentlichung | Mitglied(er) der Patentfamilie | Datum der Veröffentlichung |
|---|---|---|---|
| DE 102008020167 A1 | 16-07-2009 | KEINE | |
| US 2011282475 A1 | 17-11-2011 | KEINE | |
| EP 2770465 A1 | 27-08-2014 | KEINE | |

Für nähere Einzelheiten zu diesem Anhang : siehe Amtsblatt des Europäischen Patentamts, Nr.12/82